(19) Europäisches Patentamt
European Patent Office
Office européen des brevets

(11) **EP 3 304 118 B1**

(12) **EUROPEAN PATENT SPECIFICATION**

(45) Date of publication and mention
of the grant of the patent:
**09.09.2020 Bulletin 2020/37**

(51) Int Cl.:
***G01S 5/00*** *(2006.01)*     ***G01S 5/02*** *(2010.01)*

(21) Application number: **16751634.3**

(86) International application number:
**PCT/IB2016/053171**

(22) Date of filing: **30.05.2016**

(87) International publication number:
**WO 2016/193895 (08.12.2016 Gazette 2016/49)**

(54) **ENERGY-SAVING POSITIONING AND COMMUNICATION**

**ENERGIESPARENDE POSITIONIERUNG UND KOMMUNIKATION**

**POSITIONNEMENT ET COMMUNICATION D'ÉCONOMIE D'ÉNERGIE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2015 BE 201505337**

(43) Date of publication of application:
**11.04.2018 Bulletin 2018/15**

(73) Proprietor: **Universiteit Antwerpen**
**2000 Antwerpen (BE)**

(72) Inventors:
• **VELLEMAN, Bob**
**8560 Wevelgem (BE)**
• **WEYN, Maarten**
**2540 Hove (BE)**
• **BERKVENS, Rafael**
**2900 Schoten (BE)**
• **BELLEKENS, Ben**
**2000 Antwerpen (BE)**

(74) Representative: **DenK iP**
**Leuvensesteenweg 203**
**3190 Boortmeerbeek (BE)**

(56) References cited:
**US-A1- 2007 249 364     US-A1- 2013 016 009**
**US-B1- 7 561 101**

**Description**

**Field of the invention**

The present invention relates to the field of software applications for mobile devices such as, for example, smartphones. In particular, this invention relates to a method for determining and transmitting spatial location information in an energy-saving manner, and a related smartphone application product.

**Background of the invention**

Positioning is a frequently used technology, for example, to detect when two or more people are located in each other's vicinity. This application may require that the position of all active users of such a detection system, for example, of at least two people, is known at substantially any point in time. For example, a central server can keep track of the position of the users in order to determine the proximity of two users. If it is detected that two users are located near each other, a notification, for example, can be sent to these users, such that they can find each other. An application on the smartphone of the users can, for example, receive such notifications from the central server. Furthermore, this application can also provide for the updating of the registered location of the smartphone on the server. Such a system can, for example, be used by large companies in order to enable workers to come into contact with each other.

It is known in the prior art that a server can ascertain whether two people are located in each other's vicinity with the aid of regular position updates, which are sent, for example, by personal mobile devices such as smartphones.

It is customary that the location estimator in a smartphone attempts to reduce battery consumption. However, despite the efforts of hardware and software manufacturers to reduce energy consumption through the use of smartphone services for positioning, there is a need for a further energy reduction.

Smartphones are typically equipped with multiple sensors that can be used for positioning. In addition, such a smartphone can also comprise sensors that can be used to facilitate the tracking of a position, so as to improve the accuracy of the positioning. Information sources which may be used to directly carry out a position fix comprise, inter alia, Global Positioning System (GPS) sensor information, Wi-Fi connection information, information relating to the mobile network (such as GSM, GPRS, and/or HSDPA connections), and Bluetooth connection information. Information sources that can play a supporting role in positioning comprise, inter alia, acceleration sensor information, gyroscopic sensor information and magnetometry.

GPS uses geometric triangulation relative to satellites with known spatial locations. Wi-Fi positioning is often performed by pattern matching of the available access points (APs) at the current location and the corresponding received signal strength (RSS).

Positioning with the aid of mobile network information is based on the known locations of the base stations of the mobile network, for example, in a manner similar to Wi-Fi positioning. Bluetooth can also be used for positioning by pattern matching, such as with Wi-Fi positioning, but is usually only used for indoor applications or for estimating the proximity to known Bluetooth access points because of the limited range.

A limited overview of positioning frameworks known in the art which make use of one or more of these information sources is shown in the table below. This table shows an indication of the potential reduction in energy consumption. It is to be understood that these values are only indicative, since they are based on published information, and are therefore difficult to compare with each other.

| Framework | Technologies | Energy reduction (%) |
|---|---|---|
| A-Loc | GPS, Wi-Fi, Bluetooth, mobile network | 40.00 |
| BlueCat | Bluetooth | n/d |
| BlueEye | Bluetooth | n/d |
| CO-GPS | GPS | 99. 959 |
| EnLoc | GPS, Wi-Fi, mobile network, compass, accelerometer | n/d |
| EnTracked | GPS, accelerometer | 24.43 |
| EnTracked T | GPS, compass, accelerometer | 64.08 |
| EnTracked RT | GPS, compass, accelerometer | 70.17 |
| Liu et al. | Bluetooth | 86.50 |
| Oshin et al. | GPS, accelerometer | 27.00 |

(continued)

| Framework | Technologies | Energy reduction (%) |
|---|---|---|
| RAPS | GPS, Bluetooth, mobile network, accelerometer | 85.00 |
| Senseless | GPS, Wi-Fi, accelerometer | 74.01 |
| Zhuang et al. | GPS, GSM, accelerometer | 75.00 |

Patent US 8 472 973 describes a method for managing a location sensor in a computer device in an energy efficient manner. This method comprises a brief initialisation of the sensor to measure the signal quality. This measured signal quality is then compared with predefined signal criteria, which, for example, correspond to acceptable levels of power consumption when the sensor is used to determine the position based on a signal having a corresponding signal quality. If the signal criteria are satisfied, a position fix is performed. Otherwise, the sensor is disabled without obtaining the location information. Furthermore, the use of a location sensor with a low power consumption is described in order to determine whether a location sensor with a higher energy consumption should be activated based on an expected energy consumption.

Patent US 8 532 670 discloses a method for managing positioning in location-aware applications, wherein a first sensor in a portable device is activated in order to carry out positioning at the request of a location-aware application. The method further comprises the periodic monitoring of the movement of the portable device by a second sensor in the device, and the suppression of positioning by the first sensor in accordance with the movement of the device detected by the second sensor. US2013/016009 describes an electronic tracking device with a motion tracking unit generating motion data based on the movement of the electronic device. GPS data and motion data are transmitted to a remote server for monitoring the location of the electronic device. US2007/249364 describes a mobile device providing its location information to contacts of a user of the mobile device with a precesion level assigned to the contact.

**Brief summary of the invention**

Embodiments according to the present invention aim to provide a low consumption of the energy stored in a battery of a mobile device such as, for example, a smartphone, when updating information relating to the position of the mobile device on a server.

A smartphone application can, for example, rapidly drain the battery by regularly sending position updates to the server, since data exchange can be an important source of energy consumption. It is an advantage of embodiments of the present invention that energy can be saved by communicating less regularly with the server.

Methods and smartphone applications according to embodiments of the present invention are focused on reducing the energy consumption of a smartphone by, for example, reducing the use of positioning services and/or data transmission of location data to a server.

Methods and smartphone applications according to embodiments of the present invention can advantageously switch off the use of the positioning service of a smartphone when it can be determined in another way that the smartphone has not moved, for example, by making use of information relating to a Wi-Fi connection of the device and/or other indicative sensor signals.

It is an advantage of embodiments of the present invention that this information on the server relating to the position is still kept sufficiently accurate so as to determine the proximity of at least two users.

It is an advantage of embodiments of the present invention that the battery consumption is reduced by the avoidance of the use of the location estimator service of the smartphone when other sensory indications are available which indicate that the user's location has not changed significantly.

It is an advantage of embodiments of the present invention that the battery consumption is reduced by reducing data exchange with a server for updating information on the position of the user.

The above-mentioned aim is achieved by a device according to the present invention.

In a first aspect, the present invention relates to a method for determining and transmitting spatial location information, and a related smartphone application product.

The present invention also relates to an application product for a mobile device for carrying out a method according to an embodiment of the first aspect of the present invention.

The present invention relates to a method for determining spatial location information and the transmission of said spatial location information to a server, the method comprising:

- the updating of the spatial location information through the use of an application program interface for positioning,
- the transmission of the spatial location information to the server,

- the avoidance of the use of the application program interface for positioning by taking into consideration one or more values obtained via an inertial measurement unit, and
- the avoidance of the transmission of the spatial location information to the server by taking into consideration the accuracy of the last updated spatial location information and the accuracy of the last transmitted spatial location information, comprising the transmission of the spatial location information to the server when the accuracy of the last updated spatial location information is less than, or less than or equal to, a predetermined fraction of the accuracy of the last transmitted spatial location information.

The predetermined fraction can be in the range of 0.2 to 1.0.

The avoidance of the transmission of the spatial location information to the server may comprise the transmission of the spatial location information to the server when a distance between a position according to the last updated spatial location information and an extrapolated position based on at least two recently-transmitted spatial locations to a point in time that is indicative of the time at which the spatial location information was last updated, is greater than, or is greater than or equal to, the accuracy level of the last transmitted location information or a fraction thereof.

The extrapolated position can be obtained by a linear extrapolation of the position in relation to time.

The updating of the spatial location information may comprise the use of an application program interface for performing a position fix by a smartphone with the aid of one or more location-aware sensors in the smartphone.

The updating of the spatial location information may comprise the recording of values corresponding to the spatial location information in a memory element of a smartphone.

The updating of the spatial location information may comprise the updating of location information comprising values representative of a two-dimensional or three-dimensional position fix and one or more values representing an accuracy of this position fix.

The method may furthermore comprise an initialisation, said initialisation comprising the determination of an initial value of the spatial location information with the aid of the application program interface for positioning and the transmission of the initial value of the spatial location information.

The avoidance of the use of the application programming interface for positioning may comprise a conditional execution loop in which the spatial location information is updated repeatedly with the aid of the application program interface for positioning, until the accuracy of the spatial location information is less than, or less than or equal to, a predetermined accuracy threshold.

The accuracy threshold may correspond to a distance of less than 300 m.

The avoidance of the use of the application program interface for positioning may comprise the updating of the spatial location information when a period of time that has elapsed since a previous update of the spatial location information is greater than, or is greater than or equal to, a predetermined time threshold.

The time threshold may correspond to a period in a range up to 20 minutes.

The avoidance of the use of the application program interface for positioning may comprise a comparison of a value representative of the amount of time that has elapsed since the previous update of the spatial location information with the predetermined time threshold.

The comparison of the value representative of the amount of time that has elapsed since the previous update of the spatial location information with the predetermined time threshold may, for example, only be performed when the accuracy of the spatial location information, corresponding with the previous update of the spatial location information, is less than, or less than or equal to, the predetermined accuracy threshold.

After the updating of the spatial location information when the amount of time that has elapsed since the previous update of the spatial location information is greater than, or is greater than or equal to, the predetermined time threshold, the spatial location information can be transmitted to the server.

The avoidance of the use of the application program interface for positioning may comprise a test of a wireless network connection, for example, a wireless Wi-Fi connection.

The use of the application programming interface can be avoided when a wireless network connection has been established and an assigned network address corresponding to the wireless network connection has remained unchanged since a previous performance of the test of the wireless network connection.

The test of the wireless network connection may comprise the storage of the network address for use in a subsequent performance of the test.

The test of the wireless network connection can, for example, only be performed when the accuracy of the spatial location information, corresponding to the previous update of the spatial location information, is less than, or less than or equal to, the predetermined accuracy threshold and/or when the amount of time that has elapsed since the previous update of the spatial location information is greater than, or is greater than or equal to, the predetermined time threshold.

The avoidance of the use of the application program interface for positioning may comprise a test of the one or more values obtained via the inertial measurement unit.

The test of the one or more values obtained via the inertial measurement unit may comprise the sampling of the one or more values corresponding to one or more speed measurements, acceleration measurements and/or orientation measurements.

The test of the one or more values obtained via the inertial measurement unit may comprise the comparison of the one or more values, or an aggregate value of these values, with one or more predetermined movement threshold values.

The use of the application program interface for positioning can, for example, be avoided when the test of the value or values obtained via the inertial measurement indicate(s) no significant movement.

The test of the value or values obtained via the inertial measurement unit may comprise the sampling of one or more values corresponding to an acceleration measurement, and the estimation of a speed comprised based on the sampled acceleration and a previously sampled acceleration.

The test of the value or values obtained via the inertial measurement unit may comprise the determination of a time period based on the estimated speed, and waiting during the determined time period to subsequently update the spatial location information by making use of the application programming interface for positioning.

The test of the one or more values obtained via the inertial measurement unit can, for example, only be performed when the accuracy of the spatial location information, corresponding to the previous update of the spatial location information, is less than, or less than or equal to, the predetermined accuracy threshold and/or when the amount of time that has elapsed since the previous update of the spatial location information is greater than, or is greater than or equal to, the predetermined time threshold and/or the test of the wireless network connection indicated that no wireless network connection had been established or the assigned network address corresponding to a wireless network connection recently changed.

The present invention also relates to an application product for mobile devices adapted for, when executed on the mobile device, the implementation of a method according to one of the embodiments described above.

The application product may be further adapted to receive a notification from the server, the notification indicating the proximity of another user.

The present invention further also relates to a mobile device with a memory, wherein an application product is stored in the memory according to one of the embodiments described above.

Particular and preferred aspects of the invention are set out in the appended independent and dependent claims. Features of the dependent claims may be combined with features of the independent claims and with features of other dependent claims as appropriate and not merely as explicitly set out in the claims.

**Brief description of the drawings**

FIG. 1 shows a method according to embodiments of the present invention.
FIG. 2 shows an algorithm according to a method according to a first particular embodiment of the present invention.
FIG. 3 shows an algorithm according to a method according to a second particular embodiment of the present invention.
FIG. 4 shows a part of the algorithm according to a method according to the second particular embodiment of the present invention in detail.
FIG. 5 shows the recorded positions of a number of test subjects in an example to illustrate embodiments of the present invention.
FIG. 6 shows the recorded positions plotted against time for the nine test subjects in this example to illustrate embodiments of the present invention.
FIG. 7 and FIG. 8 illustrate the battery consumption for a system making use of a method according to an embodiment of the present invention compared to a system making use of a conventional method for position determination.
FIG. 9 to FIG. 12 illustrate the power (left axis) and the energy (right axis) for a system in which the position is transmitted instantaneously (FIG. 9), with a delay of 1 minute (FIG. 10), with a delay of 5 minutes (FIG. 11) and according to a method according to an embodiment of the present invention (FIG. 12).

The drawings are only schematic and are non-limiting. In the drawings, the size of some of the elements may be exaggerated and not drawn on scale for illustrative purposes. Any reference signs in the claims shall not be construed as limiting the scope. In the different drawings, the same reference signs refer to the same or analogous elements.

**Detailed description of the embodiments**

Although the present invention will hereinafter be described with respect to particular embodiments and with reference to certain drawings, the invention is not limited thereto but only by the claims.

Reference throughout this specification to 'one embodiment' or 'an embodiment' means that a particular feature, structure or characteristic described in connection with the embodiment is included in at least one embodiment of the present invention. Thus, appearances of the phrases 'in one embodiment' or 'in an embodiment' in various places throughout this specification may, but do not necessarily, all refer to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of illustrative embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, the terms 'first', 'second' and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms 'top', 'bottom', 'above', 'front' and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term 'comprising', used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression 'a device comprising means A and B' should not be limited to devices consisting only of components A and B. It means that with respect to the present invention, the only relevant components of the device are A and B.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention relates to a method for determining and transmitting spatial location information, and a related smartphone application product.

In a first aspect, the present invention therefore relates to a method for determining spatial location information and the transmission of said spatial location information to a server. The method comprises the updating of the spatial location information through the use of an application program interface for positioning and the transmission of the spatial location information to the server. The method further comprises the avoidance of the use of the API for positioning by taking into consideration one or more values obtained via an inertial measurement unit, and the avoidance of the transmission of the spatial location information to the server by taking into consideration the accuracy of the last updated spatial location information and the accuracy of the last transmitted spatial location information. In some embodiments, in order to decide whether information should be transmitted, use can also be made of an estimated position, for example, an extrapolated position based on at least two recently transmitted spatial location information.

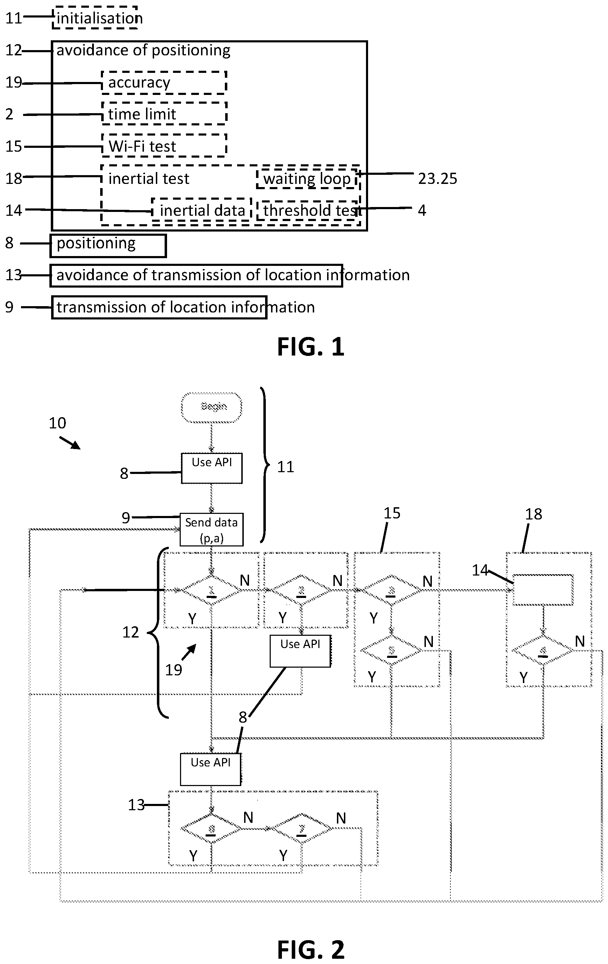

By way of illustration, not limiting any embodiments, the method will be discussed in more detail with reference to FIG. 1.

FIG. 1 schematically illustrates a method 10 according to embodiments of the present invention. Method 10 comprises the updating 8 of the spatial location information through the use of an application program interface (API) for position fixing, for example, an application program interface for execution by a smartphone, for example, for the performance of a position fix by means of one or a plurality of location-aware sensors in the smartphone. It is an advantage of embodiments that an implementation of a method according to embodiments of the present invention requires no specific prior knowledge of the manner in which the API performs the positioning. Thus, the API can, for example, be provided by the manufacturer of a smartphone on which the method is carried out substantially automatically, or a third party, wherein this API can be updated independently of the software implementation of the method according to embodiments, or replaced by another API with the same functionality and access form.

The API for positioning can, for example, determine a location based on a GPS connection. However, the API is not limited thereto. For example, if a Wi-Fi network is within range, information from this Wi-Fi network or multiple Wi-Fi networks, can be used to determine or improve the position. The API may, for example, utilise a framework for estimating a location such as explained in the background section of the present description.

The method may also comprise the recording of the spatial location information for later use, such as the storage of corresponding values in a memory element. The location information may comprise values representative of a two-dimensional or three-dimensional position fix, for example substantially corresponding to a projection of a position of the smartphone onto an Earth-surface fixed coordinate system. The location information may further comprise one or more values representative of an accuracy of the positioning, for example, an absolute measurement error, a relative measurement error, a standard deviation, an interquartile deviation or a similar value or values representative of the order of magnitude of the deviation of the actual location from the sampled location.

A method according to embodiments of the present invention may comprise an initialisation 11, an initial value of the spatial location information being determined with the aid of the application program interface for positioning. The initialisation may further comprise the transmission of the spatial location information to a server, for example, independently of steps described below for the avoidance of communication with the server.

A method according to embodiments of the present invention may also comprise an interruption condition that temporarily interrupts or stops the performance of the method, for example, when no communication path to the server is available for at least a predetermined switch-off time, for example, when no Wi-Fi or 3G connection is available for at least said switch-off time. A method according to embodiments of the present invention may also comprise a resumption condition, for example, when a communication path to the server is restored.

The method comprises the avoidance 12 of the use of the API for positioning by taking into consideration one or more values obtained via an inertial measurement unit, for example, an inertial measurement unit in a smartphone on which the method is carried out substantially automatically, for example, by means of the execution of a corresponding smartphone application. The method according to embodiments may, for example, comprise a step wherein an avoidance of the use of the API for positioning is sought. This avoidance 12 of the use of the API may be carried out in a method according to embodiments of the present invention, for example, carried out repeatedly, after the initialisation 11 described above.

The use of the API for positioning can, for example, also be avoided 12 when the spatial location information is sufficiently accurate and/or recently updated.

The avoidance 12 of the use of the API for positioning may comprise a conditional execution loop 19 in which the spatial location information is updated repeatedly 8 by means of the API for positioning until an accuracy of the spatial location information is less than, or less than or equal to, a predetermined accuracy threshold. The accuracy threshold may, for example, correspond to a distance of less than 300 m, preferably less than 200 m, such as 100 m, or less, for example 50 m, or even less, for example 10 m. It is an advantage of embodiments of the present invention that the avoidance 12 of the use of the API for positioning, and the associated energy savings, is only applied if a sufficiently accurate position fix has been obtained.

The avoidance 12 of the use of the API for positioning may comprise the updating 8 of the spatial location information when the amount of time that has elapsed since the previous update of the spatial location information is greater than, or greater than or equal to, a predetermined time threshold. This time threshold may, for example, correspond to a period in the range of 30 s to 20 min, preferably in the range of 1 min to 10 min, such as 5 min, although other time thresholds are also possible. It is an advantage of embodiments of the present invention that an updating 8 of the spatial location information happens at least once in every time period corresponding to the predetermined time threshold, in order to in such a way ensure that the spatial location information is always sufficiently up to date. It is a further advantage that an incorrect position fix, for example, due to an erroneous value of the spatial location information, and/or the associated accuracy, reported by the API, will be replaced within this period.

In embodiments of the present invention, the avoidance 12 of the use of the API for positioning may comprise a comparison 2 of a value representative of the amount of time that has elapsed since the previous update 8 of the spatial location information with the predetermined time threshold. In embodiments of the present invention, this comparison 2 can only be carried out when the accuracy of the spatial location information, corresponding to its previous update, is less than, or less than or equal to, the predetermined accuracy threshold. It is an advantage of embodiments of the present invention that the frequent comparison 2 of the elapsed time, and thus the associated cost in efficiency and energy, is avoided when repeated updates are already carried out to improve the accuracy of the positioning.

After this updating 8 of the spatial location information when the amount of time that has elapsed since the previous update of the spatial location information is greater than, or greater than or equal to, the predetermined time threshold, the transmission 9 of the spatial location information to the server can be carried out in a method 10 according to embodiments of the present invention, for example, independently of the step described below for the avoidance 13 of communication with the server.

In embodiments of the present invention, the avoidance 12 of the use of the API for positioning may comprise a test 15 of a wireless network connection, preferably a wireless Wi-Fi connection. For example, this test can avoid the use of the API when a wireless network connection has been established and the assigned network address, for example, an IP address, corresponding to this wireless network connection, has remained unchanged since a previous performance of this test. If a connection is present, this test 15 may therefore comprise the sampling of the network address and the storage of the network address for use in a subsequent evaluation of the test 15. If it concerns the first performance of this test in which a network connection is determined, the test can have a negative result, despite no network address, having been obtained in a previous implementation of the test, being present, for example, by a suitable initialisation of a variable representative of the last observed network address in the initialisation 11.

In a method according to embodiments of the present invention, the test 15 of the wireless network connection can only be performed when the accuracy of the spatial location information, corresponding to the previous update of the spatial location information, is less than, or less than or equal to, the predetermined accuracy threshold and/or, and preferably, when the amount of time that has elapsed since the previous update of the spatial location information is greater than, or is greater than or equal to, the predetermined time threshold. It is an advantage of embodiments of the present invention is that the frequent testing 15 of the network connectivity, and thus the cost associated therewith in efficiency and energy, is avoided. It is an advantage of embodiments of the present invention that the limited range of wireless networks, preferably Wi-Fi networks, can be used to detect whether a user has remained within a reasonable distance of their previously registered location. It is an advantage of embodiments of the present invention that use is made of information related to a wireless network connection, for example, a Wi-Fi connection, when such a connection is present, without requiring the presence of wireless network connectivity. For example, an active Wi-Fi module can improve the performance of a method according to embodiments without this method always requiring an active Wi-Fi module.

In embodiments of the present invention, the avoidance 12 of the use of the API for positioning may comprise a test 18 of one or more values obtained via an inertial measurement unit. For example, this test may comprise the sampling 14 of one or more values corresponding to one or more speed measurements, acceleration measurements and/or orientation measurements, for example, provided by a speedometer, an accelerometer, a gyroscope and/or an electronic compass. The one or more values may correspond to absolute inertial measurements, or be differential with respect to time. This test may comprise the comparison 4 of this/these one or more values, or an aggregate value, such as, for example, an average or a mathematical norm of these values, with one or more predetermined movement threshold values. For example, a motion threshold value for the Euclidean norm of the angular velocity, such as, for example, obtained via a gyroscope readout, can be in the range of 0.01 rad/s to 0.2 rad/s, preferably in the range of 0.025 rad/s to 0.1 rad/s, such as 0.05 rad/s. For example, a motion threshold value for the Euclidean norm of the linear acceleration, such as, for example, obtained via a speed measurement, can be in the range of 0.2 m/s to 15 m/s, preferably in the range of 0.5 m/s to 10 m/s, such as 0.75 m/s or 5 m/s.

When the test 18 of the value or values obtained by means of the inertial measuring unit indicates no significant movement, for example, no significance according to the predetermined movement threshold values, the method according to embodiments of the present invention can avoid the use of the API for positioning, while in the event of a significant movement, the spatial location information can indeed be updated 8 by making use of the application programming interface for positioning.

In a method according to embodiments of the present invention, the test 18 of one or more values obtained via the inertial measurement unit can only be performed when the accuracy of the spatial location information, corresponding to the previous update of the spatial location information, is less than, or less than or equal to, the predetermined accuracy threshold and/or when the amount of time that has elapsed since the previous update of the spatial location information is greater than, or is greater than or equal to, the predetermined time threshold and/or the test of the wireless network connection indicated that no wireless network connection had been established or the assigned network address corresponding to a wireless network connection recently changed. Preferably, the test of one or more values obtained via the inertial measurement unit can only be performed when the accuracy of the spatial location information, corresponding to the previous update of the spatial location information, is less than, or less than or equal to, the predetermined accuracy threshold and the amount of time that has elapsed since the previous update of the spatial location information is greater than, or is greater than or equal to, the predetermined time threshold, and the test of the wireless network connection does not result in the spatial location information being updated. It is an advantage of embodiments according to the present invention that the use of an inertial measurement unit is avoided, and thus the associated cost in efficiency and energy consumption, when the need for an updating 8 of the location information can be established in another way.

In a method according to embodiments of the present invention, the test 18 of the value or values obtained via the inertial measurement unit can comprise the sampling 14 of one or more values corresponding to an acceleration measurement. Such embodiments may further comprise the estimation 22 of a speed based on the sampled acceleration and a previously sampled acceleration. Embodiments of the present invention may also comprise the determination 23 of a time period based on the estimated speed, and the waiting 25 during this time period, after which is followed with the updating 8 of the spatial location information by making use of the application programming interface for positioning.

Embodiments of the present invention further comprise the transmission 9 of the spatial location information to a server, for example, via a mobile telephone network and/or a wireless network connection, for example, according to well-known methods for data communication.

Embodiments of the present invention further comprise a step wherein a reduction of the communication with the server is sought. The use of the API for positioning is limited in accordance with the above-described step 12, but when this API is nevertheless called, for example, when the avoidance of the use of the API is not opportune, the communication with the server may be restricted.

Embodiments of the present invention further comprise the avoidance 13 of the transmission of the spatial location information to the server by taking into consideration the accuracy of the last updated, for example, the most recently determined, spatial location information and the accuracy of the last transmitted, for example, the most recently transmitted, spatial location information.

The avoidance 13 of the transmission of the spatial location information to the server may comprise the transmission 9 of the spatial location information to the server when the accuracy of the last updated spatial location information is less than, or less than or equal to, a predetermined fraction of the accuracy of the last transmitted spatial location information. This predetermined fraction may preferably, but need not necessarily, be strictly less than 1. The predetermined fraction can, for example, be in the range of 0.1 to 2.0, for example in the range of 0.2 to 1.0, preferably in the range of 0.5 to 0.8, such as, for example, 2/3. It is an advantage of embodiments of the present invention that position updates are transmitted to the server if they may substantially improve the accuracy of the location registered on the server.

The avoidance 13 of the transmission of the spatial location information to the server may further comprise the transmission 9 of the spatial location information to the server when a distance between a position according to the last updated spatial location information and an extrapolated position based on at least two recently transmitted spatial locations, for example, comprising the last transmitted spatial location information, to a point in time that is indicative of the time at which the spatial location information was last updated, is greater than the accuracy of the last transmitted location information. This distance may refer to a Euclidean metric, but is not necessarily limited thereto. For example, the distance can also be determined by another mathematical metric, such as a Chebyshev metric or a Manhattan metric, for example, with a view to an advantageous computational efficiency.

It is an advantage of embodiments of the present invention that the transmission of new spatial location information to the server is avoided when an extrapolated position, which can, for example, be carried out in parallel by the server, only deviates a small amount from the new spatial location information, wherein the accuracy of the last available spatial location information on the server is taken into consideration.

The extrapolated position can, for example, be a linear extrapolation of the position plotted against time. It is an advantage of such a linear extrapolation that it can be efficiently carried out on both a smartphone, for example, assuming a limited power reserve and processing capacity, or in parallel on the server, for example, assuming a large number of positions to be processed in parallel of a large number of users. It is a further advantage that a linear extrapolation requires only two separate and recently transmitted spatial locations, and does not require additional information sources, such as map data or statistical information relating to movement patterns based on location.

FIG. 2 to 4 show two possible particular embodiments according to the present invention. However, the present invention is not limited to these particular embodiments. The first particular embodiment, shown in FIG. 2, shows a method 10 according to embodiments of the present invention, which is composed of three parts, an initialisation part 11, in which an initial spatial position is determined 8 and transmitted 9 to a server, a part 12 that seeks to avoid the use of an application program interface for positioning, and a part 13, which attempts to reduce communication with the server when the API for positioning is activated.

This algorithm can make use of two main variables: a position p and an accuracy a at this position, which, for example, are both reported by the API for positioning. In addition, the point in time t at which these values were requested from the API can be kept track of.

A reduction of the use of the API for positioning is sought, but when this API is used, a reduction of the data exchange with the server is also sought, according to embodiments of the present invention.

In embodiments according to the present invention, multiple versions of the above-mentioned variables can also be kept track of, for example, corresponding to position fixes at multiple points in time. In addition to the latest version i obtained via the API for positioning, the latest version j that was transmitted to the server can also be kept track of, and the version j-1 transmitted to the server before the transmission of the last transmitted version j.

The method 10 can, for example, begin by requesting 8 the position and accuracy from the API for positioning. The position of obtained from the API is indicated by p, and the accuracy by a. The value of p is stored in the variables $p_{j-1}$, pj and pi, and the value of a is stored in the variables $a_{j-1}$, aj and $a_i$. An implementation of the method 10 can here also create and initialise the time variables $t_{j-1}$, $t_j$ and ti with the current time t. Next, the position pi and the accuracy $a_i$ are transmitted 9 to the server. With this, the initialisation step 11 can be completed.

The part 12 that seeks to avoid the use of the application program interface for positioning can start with two conditions, condition 1 and condition 2, which can result in the activation of the API for positioning.

In Condition 1 (ai > $a_t$) it is checked whether the last obtained accuracy $a_i$ is greater than a threshold value for the accuracy $a_t$, for example, a predetermined threshold value of 100 m. If the last obtained accuracy is greater than this threshold value, the spatial location information (p,a) is once again updated 8 by using the API for positioning. A conditional execution loop can be formed in which the spatial location information is repeatedly updated 8 until the accuracy is smaller than the threshold value. These updated values are not necessarily always transmitted to the server, according to embodiments of the present invention.

Condition 2 checks whether updated spatial location information has been sent at least once every predetermined time $t_h$. Condition 2 can thus be formed by an inequality relationship t - tj > $t_h$ based on the subtraction of the time tj at which the last update of the location information was sent to the server, from the current time t. The predetermined time threshold $t_h$ may therefore constitute a figurative periodic heartbeat. If the period of the heartbeat has expired, the spatial location information is updated 8 by making use of the API for positioning, and may then be transmitted 9 to the server without the intervention of the step for the avoidance 13 of the transmission of the location information, such that the heartbeat can provide for the signalling to the server that the method, for example, performed by a smartphone application, is still being performed.

For example, the predetermined time threshold can be set to 5 minutes. As illustrated, for example, in FIG. 2, in embodiments of the present invention, Condition 2 may be carried out when the last accuracy is less than the accuracy threshold value in accordance with Condition 1.

If the heartbeat period according to the time threshold $t_h$ has not expired, part 12 that seeks to avoid the use of the application program interface for positioning can continue with Condition 3. In Condition 3, information is gathered by simply observing a wireless network connection, for example, a Wi-Fi connection. A user can decide, however, to switch off a required module for wireless network connection, for example, a Wi-Fi module, or the module may also not be connected to a wireless network, despite the fact that the required module or modules is/are active. Condition 3 can therefore test whether a network connection has been established. If not, Condition 4, described further below, can be continued with.

If an active wireless network connection has been established, changes of the hardware address, for example, the IP address, can be monitored according to embodiments of the present invention. In each cycle of the algorithm shown in FIG. 2, it is checked by means of Condition 5, in Condition 5, if the current hardware address corresponds to the last observed hardware address. If this network address remains unchanged, the checking of the position via the API for positioning can be avoided, as well as the transmission of data to the server. If the address has changed, an updating 8 of the spatial location information via the API for positioning can be carried out. After this updating 8, the part 13 for the avoidance of communication with the server is called again. For example, when a person remains connected to the same Wi-Fi access point (AP), it can be assumed that this user remained within a reasonable distance of the last transmitted position.

Condition 4 can be carried out in embodiments of the present invention when no active network connection was established, for example, by Condition 3, therefore, for example, when the Wi-Fi module is switched off or not connected. An inertial measurement unit (IMU) can here be invoked 14, which can be assumed to always be available for the supply of movement-related information. The IMU can, for example, comprise an accelerometer, a speedometer, a gyroscope and/or an electronic compass. For example, by making use of only gyroscopic data, it can already be empirically tested whether there is a significant movement. If the angular velocity, for example calculated as the norm of the three Cartesian coordinates of the pseudo-vector angular velocity, is greater than a threshold value, for example, 0.05 rad/s, this means that there is a significant movement. In such a case, an updating 8 of the spatial location information via the API for positioning can be carried out. After this updating 8, the part 13 for the avoidance of communication with the server is invoked again, as described further below. In the other case, the calling of the API for positioning can be avoided, as well as the transmission of data to the server.

The third part 13 can start with requesting 8 the current position and the associated accuracy of the API for positioning. If the use of the API was not avoided in the second part 12, the energy associated with the use of the API is always consumed at this point. The aim is, however, to still reduce the power consumption, by limiting the communication with the server.

In a first condition 6 (ai < f.aj) of part 13, it is checked whether the last accuracy, obtained through the API for positioning, is less than a predetermined fraction f of the last accuracy that was transmitted to the server 9. This fraction can, for example, have a value of 2/3. If this condition is met, the more accurate spatial location information can be transmitted to the server. In this way, it can be ensured that the server always has the most accurate location available, while communication can still be avoided if the newly obtained location information falls within the uncertainty zone of the last transmitted location.

If the accuracy does not decrease, a movement can still take place such that the uncertainty zone of the last transmitted position is exited. To determine whether newer spatial location information needs to be transmitted, it can be determined, by Condition 7, if it is possible to predict the newly obtained position based on the last two transmitted positions, for example, transmitted to the server at points in time $t_{j-1}$ and tj. A linear prediction of the position $p_p$ can be obtained, for example, by the following:

$$p_p = p_j + (p_{j-1} - p_j)(t_i - t_j)/(t_j - t_{j-1})$$

Wherein the corresponding Condition 7 is formed by $a_j < \Delta(p_i, p_p)$, wherein p can represent a position vector, for example, consisting of a latitude and a longitude, and wherein $\Delta$ can be a function to calculate a distance between two such positions. For example, the latitude of the predicted position can be calculated by the distance in the latitudinal direction between the two last transmitted positions. This distance can be divided by the time difference between the two last transmitted positions, thus resulting in a speed. The speed can then be multiplied by the time elapsed since the last transmitted position, resulting in a travelled distance relative to the last transmitted position. This can be carried out in a similar manner for the longitude component. By adding these components up vectorially with the last transmitted position, a predicted position $p_p$ is obtained. If the distance between the predicted position and the current position reported by the API for positioning is greater than the accuracy of the last position transmitted to the server, the current location information can be sent to the server. However, if the predicted position is close enough to the current position obtained via the API, then the server can obtain substantially the same position by extrapolation, such that no updated information needs to be sent.

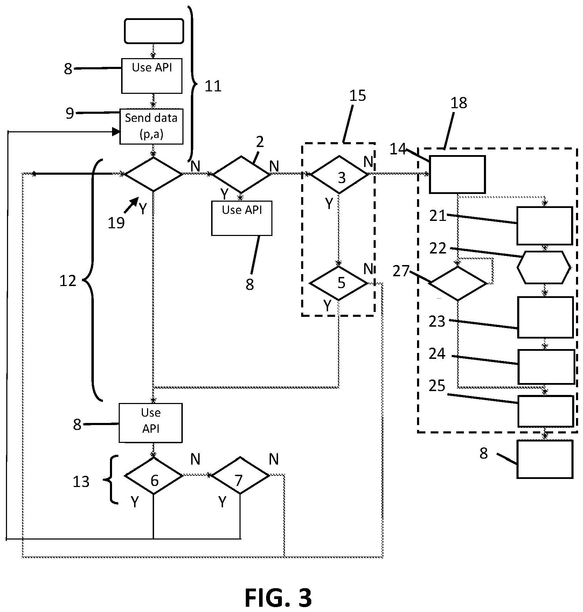

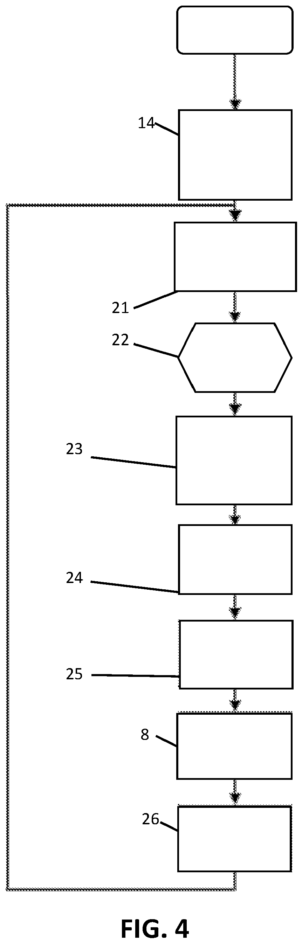

FIG. 3 and FIG. 4 show a second method according to a second particular embodiment of the present invention. As illustrated in FIG. 3, this method can proceed analogously to the method according to the first particular embodiment, shown in FIG. 2, except that the test 18 of the value or values obtained via the inertial measurement unit is constructed differently. Just as in the first particular embodiment, the test 18 here too comprises the sampling 14 of one or more values corresponding to one or more speed measurements, acceleration measurements and/or orientation measurements.

FIG. 4 gives a detailed view of steps of the test 18 in the second particular embodiment. Here the method comprises the sampling 14 of acceleration measurements, and the calculation 22 of a speed between points at which the acceleration was sampled, for example, the most recent sampling of the acceleration and a previous sampling of the acceleration. The method may, for example, comprise a distance calculation 21 of a distance vector between a position estimate in accordance with these two samples. For this purpose, a new position and velocity can be determined, for example, based on the newly sampled acceleration and previous location information and speed, for example, by applying a linear approximation. Based on the calculated speed 22, a time period is then determined 23, after which a new sampling 14 of the acceleration will take place. For example, an inverse parallel relationship or a monotonically decreasing relationship can be imposed between the time period and the velocity. The next position can then be calculated 24, and the method can proceed to waiting 25 until the determined time period has elapsed. This is then followed with the updating 8 of the spatial location information by making use of the application programming interface for positioning. This component can then begin a new cycle, for example, after the storage 26 of the spatial location information and the calculated speed for use in a new cycle.

Although the procedure shown in FIG. 4 may be used on its own as an inertial test 14, it can also be combined with another form of motion detection 27, as shown in FIG. 3, for example, by comparing 4 one or more sampled inertial values with one or more predetermined movement threshold values. As such, the procedure as described above and shown in FIG. 4 can be used as an alternative or as a supplement for another test for motion detection according to embodiments of the present invention.

A method according to embodiments of the present invention can be implemented in software, for example, in a smartphone application, and can, for example, relate to an algorithm, for example, implemented in a software product, which provides a reduction of the energy consumption of a smartphone. A method according to embodiments of the present invention may therefore relate to an algorithm for reduction of energy consumption. A method according to embodiments of the first aspect of the present invention can, for example, be implemented in a smartphone application product according to embodiments of the second aspect of the present invention.

In a second aspect, the present invention relates to an application product for mobile devices, for example, a smartphone software product, for determining and transmitting spatial location information. This application product is adapted for carrying out a method according to embodiments of the first aspect of the present invention.

An application product according to embodiments of the second aspect of the present invention may be further adapted to receive a notification from the server, and, for example, inform the user in an appropriate manner as a result of this notification. This notification may further indicate the proximity of another user, for example, to allow those users who are in each other's immediate vicinity to come into contact with each other.

The application product is typically implemented as a computer program product that provides the functionality of any of the methods according to the present invention when they are carried out on a calculation device / calculator, for example, a processor of a mobile device. Such a computer program product can comprise a machine-readable code for execution by a programmable processing unit. The computer program product can also be downloaded to the mobile device so that a user could use it on their mobile device.

In yet another aspect, the present invention also comprises a mobile device on which the application product as described above is installed. Such a mobile device can be a smartphone, a tablet, a portable computer, etc.

By way of illustration, illustrative results are described further below, which were obtained by carrying out a method according to embodiments of the present invention on pre-recorded data. This example serves only as an example to help a person skilled in the art in the reduction of the invention to practice, and should not be construed as a limitation of the invention in any sense.

It was found that the method according to embodiments of the present invention needs to make use of the API for positioning approximately 70% less often, and communicates with the server about 77% less often, while an accuracy level of around 98% was still obtained in the detection of proximity.

For this simulated example based on pre-recorded data, use was made of nine databases of sensor information collected by different persons under conditions corresponding to their normal behaviour, for example, in terms of movement patterns. The data includes the estimated positions and accuracy reported by the API for positioning of the smartphone of the respective users, information relating to the Wi-Fi connection, and gyroscopic data. The data was recorded by the sampling of the corresponding sensors at the maximum frequency imposed by the calling of the API for positioning.

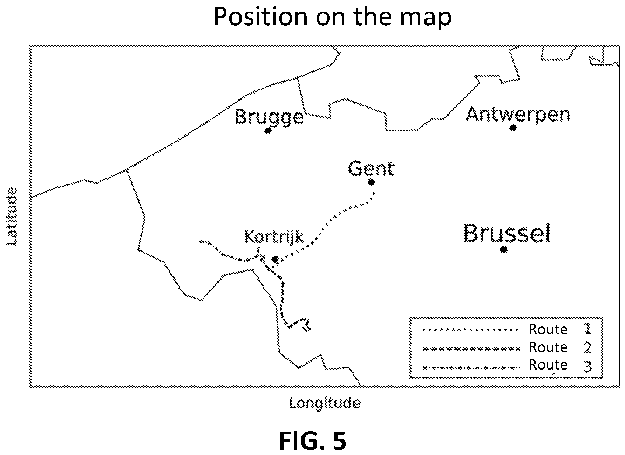

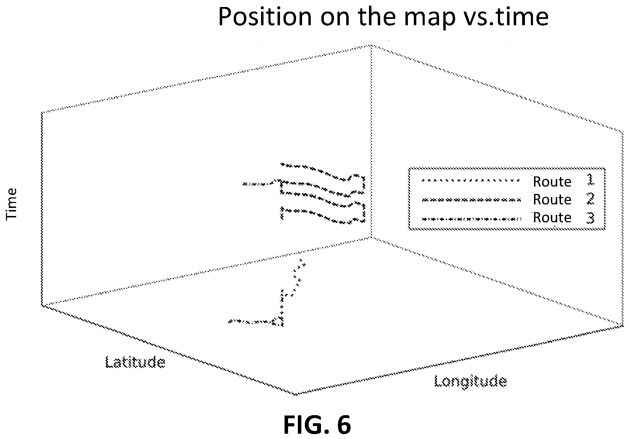

The recorded positions of the nine test subjects are shown in FIG. 5. To allow the users to initiate personal contact, for example, to convene an impromptu meeting, the users must, for example, be located within a distance of one kilometre from one another. This additional variable is shown in FIG. 6.

The datapoints shown in these figures denote measuring points in the databases. This collected information was used to illustrate when the API for positioning would be used and when the location information would be transmitted to the server, if a method according to embodiments of the present invention would be implemented.

Potential contacts were determined, in accordance with the proximity of users, in 11 combinations of the databases. These combinations were used to calculate an illustrative precision and accuracy.

Of the recorded datapoints, the location information would be sent to the server in 23.48% of the measurements. The API for positioning would be used in 29.54% of the measurements. The accuracy of the algorithm, when applied to this data, is 93.71% and the corresponding precision is 99.63%. The accuracy indicates what fraction of the measurements could be correctly identified by the algorithm as a contact or no contact, compared with all the actual contacts. This gives an overall picture of the quality of the algorithm, both with respect to the detection of contacts as detecting when users are located too far away from each other for initiating an impromptu contact. The precision represents the fraction of the measurements in which the algorithm allows the server to correctly detect a contact. These values are further illustrated in the following confusion matrix:

| | | Raw data | | |
|---|---|---|---|---|
| | | Contact | No contact | Total |
| Result of algorith m | Contact | 25315 | 1663 | 26978 |
| | No contact | 94 | 841 | 935 |
| | Total | 25409 | 2504 | 27913 |

This matrix was obtained as the sum of the confusion matrices resulting from the calculation of contacts between the various databases. The large number of false positives, that is, Type I errors, is possibly caused by a contact between databases two and nine, wherein a high-speed movement of two users in each other's vicinity was found.

This example thus illustrates that despite a less frequent exchange of data with the server of the most recent position fix, the server may still be enabled to accurately determine when two users are in close proximity to each other.

The foregoing description details certain embodiments of the invention. It will be appreciated, however, that no matter how detailed the foregoing appears in text, the invention may be practised in many ways. It should be noted that the use of particular terminology when describing certain features or aspects of the invention should not be taken to imply that the terminology is being re-defined herein to be restricted to include any specific characteristics of the features or aspects of the invention with which that terminology is associated.

By way of illustration, a further test was also carried out on different platforms (Android and iOS), wherein the consumed energy of smartphones was monitored during the determination of the location of the smartphone. In the test, both the battery usage and accuracy were tested. A comparative study was performed between the use of algorithms according to embodiments of the present invention (further referred to as 'present'), and the traditional algorithm, in which information is continuously transmitted (the latter is further indicated as 'conventional'). For the test, use was made of a user profile of walking users. The results are shown for users making use of an Apple iPhone device. The users travelled a specific route. For different positions along this route, a time indication was recorded for the time the position was reached. The position was compared with the position estimate by means of the smartphones, where the difference in position between the actual logged position and the position estimation indicates the error with respect to accuracy.

The accuracy was determined in two different test runs. In a first test run, an average error of 44.46 m was obtained with the conventional algorithm, while the average error was considerably lower with the present algorithm, i.e. 31.32 m. In a second test run, an average error of 46.07 m was obtained with the conventional algorithm, while the average error was considerably lower with the present algorithm, i.e. 35.05 m.

Although the average error is certainly not higher with the present algorithm than with the conventional algorithm, the data does not make it possible to identify significant differences.

The battery usage was also tested. The following table shows the battery usage in per cent / hour for both the conventional and the present algorithm. An indication of the activity is also given.

Table: battery usage

| Time | Conventional algorithm [%/h] | Present algorithm [%/h] | Activity |
|---|---|---|---|
| 14:04-15:35 | -3.83 | -1.74 | Stationary |
| 15:35-15:50 | -12.94 | -10.81 | Car |
| 15:50-16:20 | -13.41 | -10.78 | On foot |
| 16:20-16:33 | -13.15 | -9.71 | Stationary |
| 16:33-16:55 | -13.06 | -10.38 car | Car |
| 16:55-17:40 | -5.29 | -2.60 | Stationary |
| 17:40-18:31 | -12.84 | -10.92 | Car |
| 18:31-18:42 | -8.45 | $-1.52 \times 10^{-13}$ | Stationary |
| 18:42-18:51 | -13.18 | -16.92 | Car |
| 18:51-19:25 | -5.43 | -2.29 | Stationary |
| Average | -10.14 | -7.39 | varied |

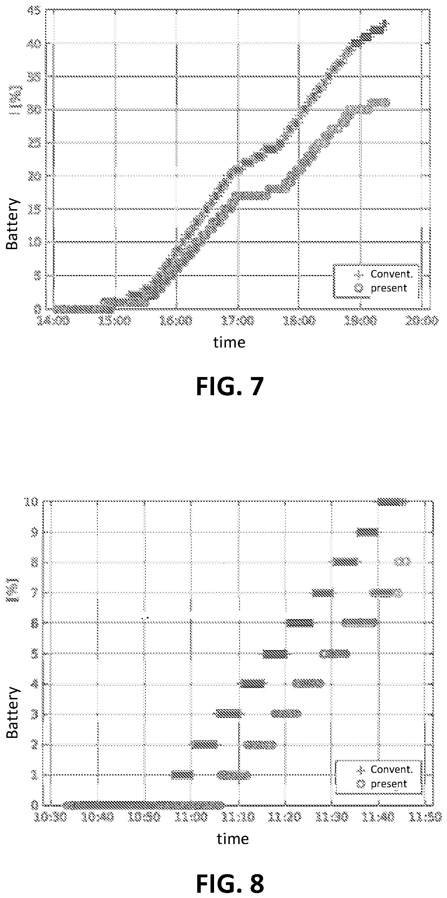

The results show that the present algorithm uses an average of 2.96% / hour of battery than the conventional implementation. This corresponds to a reduction of 32%. FIG. 7 and FIG. 8 show the battery consumption for two test routes for a system making use of a conventional implementation (+) and a system making use of an implementation according to the present invention (o).

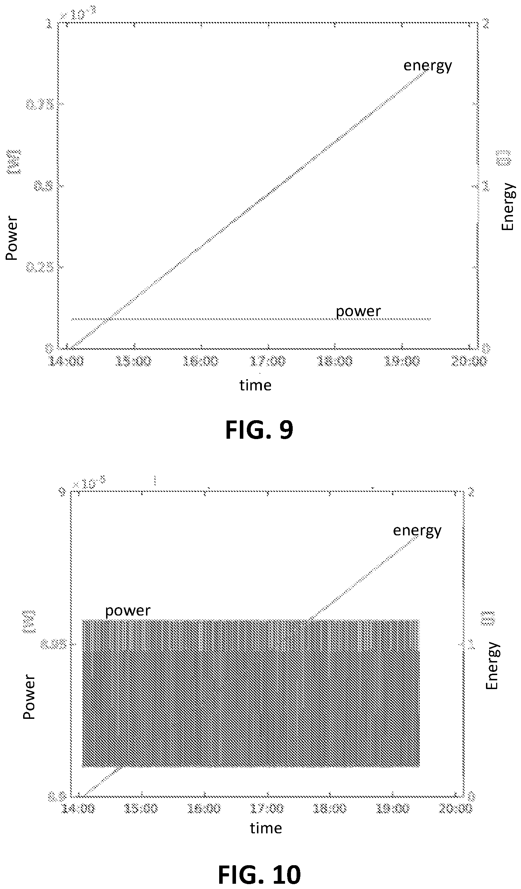

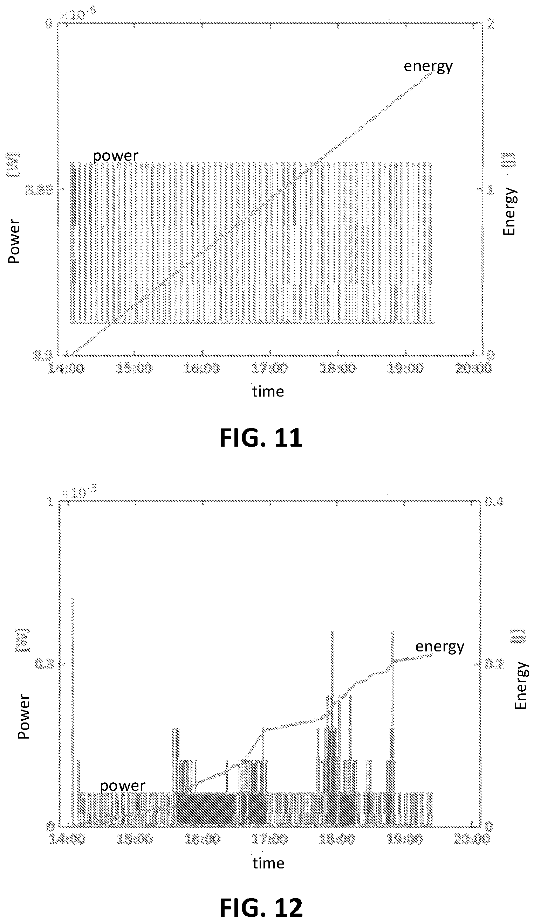

In addition to accuracy and battery usage, the energy consumption was also considered. FIG. 9 to FIG. 12 illustrate the power (left axis) and the energy (right axis) for a system in which the position is transmitted instantaneously (FIG. 9), with a delay of 1 minute (FIG. 10), with a delay of 5 minutes (FIG. 11) and according to a method according to an embodiment of the present invention (FIG. 12).

With the present algorithm, an energy consumption was obtained that was 8.13 times lower than a profile in which data is transmitted every 5 minutes, while a similar accuracy is obtained while walking in a city environment.

The above results illustrate that the energy consumption that can be reduced with the present algorithm is significant.

**Claims**

1. A method (10) for determining spatial location information and transmitting the spatial location information to a server, the method comprising:

   - the updating (8) of the spatial location information through the use of an application program interface for positioning
   - the transmission (9) of the spatial location information to the server,
   - avoidance (12) of the use of the application program interface for positioning by taking into consideration one or more values obtained via an inertial measurement unit,
   **characterised in that** the method further comprises
   - the avoidance (13) of the transmission of the spatial location information to the server by taking into consideration the accuracy of the last updated spatial location information and the accuracy of the last transmitted spatial location information, comprising the transmission of the spatial location information to the server when the accuracy of the last updated spatial location information is less than, or less than or equal to, a predetermined fraction of the accuracy of the last transmitted spatial location information.

2. The method according to claim 1, the predetermined fraction being in the range of 0.2 to 1.0.

3. The method according to one of claims 1 to 2, wherein the avoidance (13) of the transmission of the spatial location information to the server comprises the transmission (9) of the spatial location information to the server when a distance between a position according to the last updated spatial location information and an extrapolated position based on at least two recently transmitted spatial locations to a point in time is indicative of the time at which the spatial location information was last updated, is greater than, or is greater than or equal to, the accuracy level of the last transmitted location information or a fraction thereof, the extrapolated position being optionally obtained by a linear extrapolation of the position plotted against time.

4. The method according to one of claims 1 to 3, the updating (8) of the spatial location information comprising the use of an application program interface for performing a position fix by a smartphone by means of one or a plurality of location-aware sensors in the smartphone and/or the updating of the spatial location information comprising the recording of values corresponding to the spatial location information in a memory element of a smartphone and/or the updating of the spatial location information comprising the updating of location information comprising values representative of a two-dimensional or three-dimensional position fix and one or more values representative of an accuracy of this position fix.

5. The method according to one of claims 1 to 4, further comprising an initialisation (11), said initialisation comprising the determination of an initial value of the spatial location information with the aid of the application program interface for positioning and the transmission of the initial value of the spatial location information and/or
the avoidance (12) of the use of the application programming interface for positioning comprising a conditional execution loop (19), in which the spatial location information is updated repeatedly (8) with the aid of the application program interface for positioning, until the accuracy of the spatial location information is less than, or less than or equal to, a predetermined accuracy threshold corresponding to a distance of less than 300m.

6. The method according to one of claims 1 to 5, the avoidance (12) of the use of the application program interface for positioning comprising the updating (8) of the spatial location information when a period of time that has elapsed since a previous update of the spatial location information is greater than, or is greater than or equal to, a predetermined time threshold corresponding to a period in a range up to 20 minutes.

7. The method according to claim 6, the avoidance (12) of the use of the application program interface for positioning comprising a comparison (2) of a value representative of the amount of time that has elapsed since the previous update of the spatial location information with the predetermined time threshold and the comparison (2) of the value representative of the amount of time that has elapsed since the previous update of the spatial location information with the predetermined time threshold only being performed when the accuracy of the spatial location information, corresponding with the previous update (8) of the spatial location information, is less than, or less than or equal to, the predetermined accuracy threshold.

8. The method according to claim 7, wherein after the updating (8) of the spatial location information when the amount of time that has elapsed since the previous update of the spatial location information is greater than, or is greater than or equal to, the predetermined time threshold, the spatial location information being transmitted (9) to the server.

9. The method according to one of the previous claims, the avoidance (12) of the use of the application program interface for positioning comprising a test (15) of a wireless network connection, for example, a wireless Wi-Fi connection and wherein the use of the application program interface for positioning being avoided when a wireless network connection has been established and an assigned network address corresponding to the wireless network connection has remained unchanged since a previous performance of the test (15) of the wireless network connection.

10. The method according to claim 9, the test of the wireless network connection (15) comprising the storage of the network address for use in a subsequent performance of the test (15) and/or
the test (15) of the wireless network connection only being performed when the accuracy of the spatial location information, corresponding to the previous update (8) of the spatial location information, is less than, or less than or equal to, the predetermined accuracy threshold and/or when the amount of time that has elapsed since the previous update of the spatial location information is greater than, or is greater than or equal to, the predetermined time threshold..

11. The method according to one of the previous claims, the avoidance (12) of the use of the application program interface for positioning comprising a test (18) of the one or more values obtained (14) via the inertial measurement unit, the test (18) of the one or more values obtained via the inertial measurement unit comprising the sampling (14) of the one or more values corresponding to one or more speed measurements, acceleration measurements and/or orientation measurements and/or

the test (18) of the one or more values obtained via the inertial measurement unit comprising the comparison (4) of the one or more values, or an aggregate value of these values, with one or more predetermined movement threshold values, and/or the use of the application program interface for positioning being avoided when the test (18) of the value or values obtained via the inertial measurement indicate(s) no significant movement.

12. The method according to claim 11, the test (18) of the value or values obtained via the inertial measurement unit comprising the sampling (14) of one or more values corresponding to an acceleration measurement, and the estimation (22) of a speed based on the sampled acceleration and a previously sampled acceleration and the test (18) of the value or values obtained via the inertial measurement unit comprising the determination (23) of a time period based on the estimated speed, and the waiting (25) during the determined time period to subsequently update the spatial location information (8) by making use of the application programming interface for positioning, and/or

the test (18) of the one or more values obtained via the inertial measurement unit only being performed when the accuracy of the spatial location information, corresponding to the previous update of the spatial location information, is less than, or less than or equal to, the predetermined accuracy threshold and/or when the amount of time that has elapsed since the previous update of the spatial location information is greater than, or is greater than or equal to, the predetermined time threshold and/or the test (15) of the wireless network connection indicated that no wireless network connection has been established or the assigned network address corresponding to a wireless network connection has recently changed

13. An application product for mobile devices adapted for, when executed on the mobile device, the implementation of a method according to one of the previous claims.

14. The application product according to claim 13, said application product being further adapted to receive a notification from the server, said notification indicating the proximity of another user.

15. A mobile device with a memory, an application product being stored in said memory according to one of claims 13 to 14.

**Patentansprüche**

1. Verfahren (10) zum Bestimmen räumlicher Standortinformation und Übertragen der räumlichen Standortinformation an einen Server, wobei das Verfahren umfasst:

- das Aktualisieren (8) der räumlichen Standortinformation durch die Verwendung einer Anwendungsprogrammschnittstelle zur Positionierung,
- die Übertragung (9) der räumlichen Standortinformation an den Server,
- Umgehen (12) der Verwendung der Anwendungsprogrammschnittstelle zur Positionierung unter Berücksichtigung eines oder mehrerer Werte, die über eine träge Messeinheit erhalten werden,
**dadurch gekennzeichnet, dass** das Verfahren weiter umfasst
- das Umgehen (13) der Übertragung der räumlichen Standortinformation an den Server unter Berücksichtigung der Genauigkeit der letzten aktualisierten Standortinformation und der Genauigkeit der letzten übertragenen Standortinformation, umfassend die Übertragung der räumlichen Standortinformation an den Server, wenn die Genauigkeit der letzten aktualisierten räumlichen Standortinformation geringer als bzw. geringer als oder gleich einem vorbestimmten Bruchteil der Genauigkeit der letzten übertragenen räumlichen Standortinformation ist.

2. Verfahren nach Anspruch 1, wobei der vorbestimmte Bruchteil im Bereich von 0,2 bis 1,0 liegt.

3. Verfahren nach einem der Ansprüche 1 bis 2, wobei das Umgehen (13) der Übertragung der räumlichen Standortinformation an den Server die Übertragung (9) der räumlichen Standortinformation an den Server umfasst, wenn eine Distanz zwischen einer Position gemäß der letzten aktualisierten Standortinformation und einer auf einen Zeitpunkt hochgerechneten Position, auf mindestens zwei kürzlich übertragenen räumlichen Standortinformationen basierend, auf die Zeit hinweisend ist, bei der die räumliche Standortinformation zuletzt aktualisiert wurde, größer als bzw. größer als oder gleich dem Genauigkeitsgrad der letzten übertragenen Standortinformation oder eines Bruchteils davon ist,

wobei die hochgerechnete Position wahlweise durch eine lineare Hochrechnung der gegen Zeit aufgetragenen Position erhalten wird.

4. Verfahren nach einem der Ansprüche 1 bis 3, wobei das Aktualisieren (8) der räumlichen Standortinformation die Verwendung einer Anwendungsprogrammschnittstelle zur Durchführung einer Positionsbestimmung durch ein Smartphone mittels eines oder einer Vielzahl von standortbewussten Sensoren im Smartphone umfasst und/oder das Aktualisieren der räumlichen Standortinformation, umfassend das Aufzeichnen von Werten, die der räumlichen Standortinformation entsprechen, in einem Speicherelement eines Smartphones und/oder das Aktualisieren der räumlichen Standortinformation, umfassend das Aktualisieren von Standortinformation, die Werte umfasst, die repräsentativ sind für eine zweidimensionale oder dreidimensionale Positionsbestimmung, und eines oder mehrerer Werte, die repräsentativ sind für eine Genauigkeit dieser Positionsbestimmung.

5. Verfahren nach einem der Ansprüche 1 bis 4, weiter eine Initialisierung (11) umfassend, wobei die Initialisierung die Bestimmung eines Anfangswerts der räumlichen Standortinformation mit Hilfe der Anwendungsprogrammschnittstelle zur Positionierung und die Übertragung des Anfangswerts der räumlichen Standortinformation umfasst und/oder

das Umgehen (12) der Verwendung der Anwendungsprogrammschnittstelle zur Positionierung eine bedingte Ausführungsschleife (19) umfasst, bei der die räumliche Standortinformation mit Hilfe der Anwendungsprogrammschnittstelle zur Positionierung wiederholt aktualisiert (8) wird, bis die Genauigkeit der räumlichen Standortinformation geringer als bzw. geringer als oder gleich einer vorbestimmten Genauigkeitsschwelle ist, die einer Distanz von weniger als 300 m entspricht.

6. Verfahren nach einem der Ansprüche 1 bis 5, wobei das Umgehen (12) der Verwendung der Anwendungsprogrammschnittstelle zur Positionierung das Aktualisieren (8) der räumlichen Standortinformation umfasst, wenn eine Zeitdauer, die seit einer vorherigen Aktualisierung der räumlichen Standortinformation verstrichen ist, größer als bzw. größer als oder gleich einer vorbestimmten Zeitschwelle ist, die einer Dauer in einem Bereich bis zu 20 Minuten entspricht.

7. Verfahren nach Anspruch 6, wobei das Umgehen (12) der Verwendung der Anwendungsprogrammschnittstelle zur Positionierung einen Vergleich(2) eines Werts, der repräsentativ ist für die Zeitmenge, die seit der vorherigen Aktualisierung der räumlichen Standortinformation verstrichen ist, mit der vorbestimmten Zeitschwelle umfasst und der Vergleich (2) des Werts, der repräsentativ ist für die Zeitmenge, die seit der vorherigen Aktualisierung der räumlichen Standortinformation verstrichen ist, mit der vorbestimmten Zeitschwelle nur durchgeführt wird, wenn die Genauigkeit der räumlichen Standortinformation, die der vorherigen Aktualisierung (8) der räumlichen Standortinformation entspricht, geringer als bzw. geringer als oder gleich der vorbestimmten Genauigkeitsschwelle ist.

8. Verfahren nach Anspruch 7, wobei nach dem Aktualisieren (8) der räumlichen Standortinformation, wenn die Zeitmenge, die seit der vorherigen Aktualisierung der räumlichen Standortinformation verstrichen ist, größer als bzw. größer als oder gleich der vorbestimmten Zeitschwelle ist, die räumliche Standortinformation an den Server übertragen (9) wird.

9. Verfahren nach einem der vorstehenden Ansprüche, wobei das Umgehen (12) der Verwendung der Anwendungsprogrammschnittstelle zur Positionierung einen Test (15) einer drahtlosen Netzwerkverbindung, zum Beispiel einer drahtlosen Wi-Fi-Verbindung, umfasst und wobei die Verwendung der Anwendungsprogrammschnittstelle zur Positionierung umgangen wird, wenn eine drahtlose Netzwerkverbindung hergestellt wurde und eine zugewiesene Netzwerkadresse, die der drahtlosen Netzwerkverbindung entspricht, seit einer vorherigen Durchführung des Tests (15) der drahtlosen Netzwerkverbindung unverändert blieb.

10. Verfahren nach Anspruch 9, wobei der Test der drahtlosen Netzwerkverbindung (15) die Speicherung der Netzwerkadresse zur Verwendung in einer nachfolgenden Durchführung des Tests (15) umfasst und/oder der Test (15) der drahtlosen Netzwerkverbindung nur durchgeführt wird, wenn die Genauigkeit der räumlichen Standortinformation, die der vorherigen Aktualisierung (8) der räumlichen Standortinformation entspricht, geringer als bzw. geringer als oder gleich der vorbestimmten Genauigkeitsschwelle ist und/oder wenn die Zeitmenge, die seit der vorherigen Aktualisierung der räumlichen Standortinformation verstrichen ist, größer als bzw. größer als oder gleich der vorbestimmten Zeitschwelle ist.

11. Verfahren nach einem der vorstehenden Ansprüche, wobei das Umgehen (12) der Verwendung der Anwendungsprogrammschnittstelle zur Positionierung einen Test (18) des einen oder der mehreren Werte, die über die träge Messeinheit erhalten (14) werden, umfasst, wobei der Test (18) des einen oder der mehreren Werte, die über die träge Messeinheit erhalten (14) werden, das Abtasten (14) des einen oder der mehreren Werte umfasst, die einer oder mehrerer Geschwindigkeitsmessungen, Beschleunigungsmessungen und/oder Ausrichtungsmessungen entsprechen, und/oder
der Test (18) des einen oder der mehreren Werte, die über die träge Messeinheit erhalten werden, den Vergleich (4) der einen oder der mehreren Werte, oder eines Gesamtwerts dieser Werte mit einem oder mehreren vorbestimmten Bewegungsschwellenwerten umfasst und/oder die Verwendung der Anwendungsprogrammschnittstelle zur Positionierung umgangen wird, wenn der Test (18) des Werts oder der Werte, die über die träge Messeinheit erhalten werden, keine signifikante Bewegung anzeigt (anzeigen).

12. Verfahren nach Anspruch 11, wobei der Test (18) des Werts oder der Werte, die über die träge Messeinheit erhalten werden, das Abtasten (14) eines oder mehrerer Werte, die einer Beschleunigsmessung entsprechen, und die Schätzung (22) einer Geschwindigkeit basierend auf der abgetasteten Beschleunigung und einer zuvor abgetasteten Beschleunigung umfasst und der Test (18) des Werts oder der Werte, die über die träge Messeinheit erhalten werden, die Bestimmung (23) einer Zeitdauer basierend auf der geschätzten Geschwindigkeit und das Warten (25) während der bestimmen Zeitdauer, um nachfolgend die räumliche Standortinformation (8) unter Verwendung der Anwendungsprogrammschnittstelle zur Positionierung zu aktualisieren, umfasst und/oder
der Test (18) des einen oder der mehreren Werte, die über die träge Messeinheit erhalten werden, nur durchgeführt wird, wenn die Genauigkeit der räumlichen Standortinformation, die der vorherigen Aktualisierung der räumlichen Standortinformation entspricht, geringer als bzw. geringer als oder gleich der vorbestimmten Genauigkeitsschwelle ist und/oder wenn die Zeitmenge, die seit der vorherigen Aktualisierung der räumlichen Standortinformation verstrichen ist, größer als bzw. größer als oder gleich der vorbestimmten Zeitschwelle ist und/oder der Test (15) der drahtlosen Netzwerkverbindung angezeigt hat, dass keine drahtlose Netzwerkverbindung hergestellt wurde oder die zugewiesene Netzwerkadresse, die einer drahtlosen Netzwerkverbindung entspricht, sich kürzlich geändert hat.

13. Anwendungsprodukt für mobile Vorrichtungen, angepasst zur Implementierung eines Verfahrens nach einem der vorstehenden Ansprüche bei Ausführung auf der mobilen Vorrichtung.

14. Anwendungsprodukt nach Anspruch 13, wobei das Anwendungsprodukt weiter angepasst ist, eine Benachrichtigung vom Server zu erhalten, wobei die Benachrichtigung die Nähe eines anderen Benutzers anzeigt.

15. Mobile Vorrichtung mit einem Speicher, wobei ein Anwendungsprodukt nach einem der Ansprüche 13 bis 14 im Speicher gespeichert ist.

**Revendications**

1. Procédé (10) pour déterminer des informations d'emplacement spatial et transmettre les informations d'emplacement spatial à un serveur, le procédé comprenant :

- la mise à jour (8) des informations d'emplacement spatial par l'utilisation d'une interface de programmation d'application pour le positionnement,
- la transmission (9) des informations d'emplacement spatial au server,
- l'évitement (12) de l'utilisation de l'interface de programmation d'application pour le positionnement en prenant en considération une ou plusieurs valeurs obtenues par l'intermédiaire d'une unité de mesure inertielle, **caractérisé en ce que** le procédé comprend en outre
- l'évitement (13) de la transmission des informations d'emplacement spatial au serveur en prenant en considération la précision des dernières informations d'emplacement spatial mises à jour et la précision des dernières informations d'emplacement spatial transmises, comprenant la transmission des informations d'emplacement spatial au serveur lorsque la précision des dernières informations d'emplacement spatial mises à jour est inférieure, ou inférieure ou égale, à une fraction prédéterminée de la précision des dernières informations d'emplacement spatial transmises.

**2.** Procédé selon la revendication 1, la fraction prédéterminée étant dans la plage de 0,2 à 1,0.

**3.** Procédé selon l'une des revendications 1 à 2, dans lequel l'évitement (13) de la transmission des informations d'emplacement spatial au serveur comprend la transmission (9) des informations d'emplacement spatial au serveur lorsqu'une distance entre une position selon les dernières informations d'emplacement spatial mises à jour et une position extrapolée sur la base d'au moins deux emplacements spatiaux récemment transmis à un moment donné est indicative du moment auquel les informations d'emplacement spatial ont été mises à jour pour la dernière fois, est supérieure, ou supérieure ou égale, au niveau de précision des dernières informations d'emplacement spatial transmises ou une fraction de celles-ci, la position extrapolée étant facultativement obtenue par une extrapolation linéaire de la position relevée par rapport au temps.

**4.** Procédé selon l'une des revendications 1 à 3, la mise à jour (8) des informations d'emplacement spatial comprenant l'utilisation d'une interface de programmation d'application pour effectuer une détermination de position par un téléphone intelligent au moyen d'un ou d'une pluralité de capteurs sensibles à la localisation dans le téléphone intelligent et/ou la mise à jour des informations d'emplacement spatial comprenant l'enregistrement de valeurs correspondant aux informations d'emplacement spatial dans un élément de mémoire d'un téléphone intelligent et/ou la mise à jour des informations d'emplacement spatial comprenant la mise à jour d'informations d'emplacement comprenant des valeurs représentatives d'une détermination de position bidimensionnelle ou tridimensionnelle et une ou plusieurs valeurs représentatives d'une précision de cette détermination de position.

**5.** Procédé selon l'une des revendications 1 à 4, comprenant en outre une initialisation (11), ladite initialisation comprenant la détermination d'une valeur initiale des informations d'emplacement spatial à l'aide de l'interface de programmation d'application pour le positionnement et la transmission de la valeur initiale des informations d'emplacement spatial et/ou

l'évitement (12) de l'utilisation de l'interface de programmation d'application pour le positionnement comprenant une boucle d'exécution conditionnelle (19), dans laquelle les informations d'emplacement spatial sont mises à jour à répétition (8) à l'aide de l'interface de programmation d'application pour le positionnement, jusqu'à ce que la précision des informations d'emplacement spatial soit inférieure, ou inférieure ou égale, à un seuil de précision prédéterminé correspondant à une distance inférieure à 300 m.

**6.** Procédé selon l'une des revendications 1 à 5, l'évitement (12) de l'utilisation de l'interface de programmation d'application pour le positionnement comprenant la mise à jour (8) des informations d'emplacement spatial lorsqu'une période de temps qui s'est écoulée depuis une mise à jour précédente des informations d'emplacement spatial est supérieure, ou supérieure ou égale, à un seuil de temps prédéterminé correspondant à une période dans une plage allant jusqu'à 20 minutes.

**7.** Procédé selon la revendication 6, l'évitement (12) de l'utilisation de l'interface de programmation d'application pour le positionnement comprenant une comparaison (2) d'une valeur représentative de la quantité de temps qui s'est écoulé depuis la mise à jour précédente des informations d'emplacement spatial avec le seuil de temps prédéterminé et la comparaison (2) de la valeur représentative de la quantité de temps qui s'est écoulé depuis la mise à jour précédente des informations d'emplacement spatial avec le seuil de temps prédéterminé étant uniquement effectuée lorsque la précision des informations d'emplacement spatial, correspondant à la mise à jour précédente (8) des informations d'emplacement spatial, est inférieure, ou inférieure ou égale, au seuil de précision prédéterminé.

**8.** Procédé selon la revendication 7, dans lequel, après la mise à jour (8) des informations d'emplacement spatial lorsque la quantité de temps qui s'est écoulé depuis la mise à jour précédente des informations d'emplacement spatial est supérieure, ou est supérieure ou égale, au seuil de temps prédéterminé, les informations d'emplacement spatial étant transmises (9) au server.

**9.** Procédé selon l'une des revendications précédentes, l'évitement (12) de l'utilisation de l'interface de programmation d'application pour le positionnement comprenant un test (15) d'une connexion réseau sans fil, par exemple, une connexion Wi-Fi sans fil et dans lequel l'utilisation de l'interface de programmation d'application pour le positionnement étant évitée lorsqu'une connexion réseau sans fil a été établie et une adresse réseau attribuée correspondant à la connexion réseau sans fil est restée inchangée depuis une performance précédente du test (15) de la connexion réseau sans fil.

**10.** Procédé selon la revendication 9, le test de la connexion réseau sans fil (15) comprenant le stockage de l'adresse réseau pour une utilisation dans une performance ultérieure du test (15) et/ou

le test (15) de la connexion réseau sans fil étant uniquement effectué lorsque la précision des informations d'emplacement spatial, correspondant à la mise à jour (8) précédente des informations d'emplacement spatial, est inférieure, ou inférieure ou égale, au seuil de précision prédéterminé et/ou lorsque la quantité de temps qui s'est écoulé depuis la mise à jour précédente des informations d'emplacement spatial est supérieure, ou est supérieure ou égale, au seuil de temps prédéterminé.

11. Procédé selon l'une des revendications précédentes, l'évitement (12) de l'utilisation de l'interface de programmation d'application pour le positionnement comprenant un test (18) des une ou plusieurs valeurs obtenues (14) par l'intermédiaire de l'unité de mesure inertielle, le test (18) des une ou plusieurs valeurs obtenues par l'intermédiaire de l'unité de mesure inertielle comprenant l'échantillonnage (14) des une ou plusieurs valeurs correspondant à une ou plusieurs mesures de vitesse, mesures d'accélération et/ou mesures d'orientation et/ou
le test (18) des une ou plusieurs valeurs obtenues par l'intermédiaire de l'unité de mesure inertielle comprenant la comparaison (4) des une ou plusieurs valeurs, ou d'une valeur globale de ces valeurs, avec une ou plusieurs valeurs de seuil de mouvement prédéterminées, et/ou l'utilisation de l'interface de programmation d'application pour le positionnement étant évitée lorsque le test (18) de la valeur ou des valeurs obtenues par l'intermédiaire de la mesure inertielle n'indique aucun mouvement important.

12. Procédé selon la revendication 11, le test (18) de la valeur ou des valeurs obtenues par l'intermédiaire de l'unité de mesure inertielle comprenant l'échantillonnage (14) d'une ou plusieurs valeurs correspondant à une mesure d'accélération, et l'estimation (22) d'une vitesse sur la base de l'accélération échantillonnée et d'une accélération précédemment échantillonnée et le test (18) de la valeur ou des valeurs obtenues par l'intermédiaire de l'unité de mesure inertielle comprenant la détermination (23) d'une période de temps sur la base de la vitesse estimée, et l'attente (25) durant la période de temps déterminée d'une mise à jour ultérieure des informations d'emplacement spatial (8) en utilisant l'interface de programmation d'application pour le positionnement, et/ou
le test (18) des une ou plusieurs valeurs obtenues par l'intermédiaire de l'unité de mesure inertielle étant uniquement effectué lorsque la précision des informations d'emplacement spatial, correspondant à la mise à jour précédente des informations d'emplacement spatial, est inférieure, ou inférieure ou égale, au seuil de précision prédéterminé et/ou lorsque la quantité de temps qui s'est écoulé depuis la mise à jour précédente des informations d'emplacement spatial est supérieure, ou est supérieure ou égale, au seuil de temps prédéterminé et/ou le test (15) de la connexion réseau sans fil indiquant qu'aucune connexion réseau sans fil n'a été établie ou que l'adresse réseau attribuée correspondant à une connexion réseau sans fil a récemment changé.

13. Produit d'application pour des dispositifs mobiles adapté pour, lorsqu'il est exécuté sur le dispositif mobile, la mise en œuvre d'un procédé selon l'une des revendications précédentes.

14. Produit d'application selon la revendication 13, ledit produit d'application étant en outre adapté pour recevoir une notification du serveur, ladite notification indiquant la proximité d'un autre utilisateur.

15. Dispositif mobile avec une mémoire, un produit d'application étant stocké dans ladite mémoire selon l'une des revendications 13 à 14.

11 ⸺ initialisation

12 ⸺ avoidance of positioning

19 ⸺ accuracy

2 ⸺ time limit

15 ⸺ Wi-Fi test

18 ⸺ inertial test    waiting loop ⸺ 23.25

14 ⸺ inertial data   threshold test ⸺ 4

8 ⸺ positioning

13 ⸺ avoidance of transmission of location information

9 ⸺ transmission of location information

## FIG. 1

FIG. 2

FIG. 3

**FIG. 4**

## Position on the map

**FIG. 5**

Position on the map vs.time

FIG. 6

**FIG. 7**

**FIG. 8**

**FIG. 9**

**FIG. 10**

**FIG. 11**

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8472973 B
- US 8532670 B
- US 2013016009 A
- US 2007249364 A